Europäisches Patentamt

European Patent Office

Office européen des brevets

(19)

(11) **EP 0 559 258 B1**

(12) # EUROPEAN PATENT SPECIFICATION

(45) Date of publication and mention
of the grant of the patent:
**07.05.1997 Bulletin 1997/19**

(51) Int Cl.6: **C09K 11/86**, G21K 4/00

(21) Application number: **93200358.5**

(22) Date of filing: **10.02.1993**

(54) **Method for recording and viewing or reproducing a radiation image by means of an infrared-stimulable phosphor**

Aufnahme- und Sichtmethode oder -widergabe von einem Röntgenbild durch einen infrarotstimulierbaren Phosphor

Méthode d'enregistrement et de visualisation ou de restitution d'une image obtenue par rayonnement au moyen d'une matière fluorescente excitable par infra-rouge

(84) Designated Contracting States:
**BE DE FR GB NL**

(30) Priority: **06.03.1992 EP 92200651**

(43) Date of publication of application:
**08.09.1993 Bulletin 1993/36**

(73) Proprietor: **AGFA-GEVAERT
naamloze vennootschap
2640 Mortsel (BE)**

(72) Inventors:
- **Struye, Luc, c/o Agfa-Gevaert n.V.
  B-2640 Mortsel (BE)**
- **Leblans, Paul, c/o Agfa-Gevaert n.V.
  B-2640 Mortsel (BE)**

(56) References cited:
**EP-A- 0 304 121        EP-A- 0 382 295
EP-A- 0 415 469**

## Description

1. Field of the invention

This invention relates to a method for recording and viewing or reproducing a radiation image by means of an infrared stimulable phosphor.

2. Background of the invention

It is well known that energy-rich invisible radiation such as ultraviolet radiation, penetrating radiation such as X-rays and charged particle radiation such as cathode rays can cause appropriate substances to luminesce. Substances showing the phenomenon of luminescence under the influence of said radiation are called phosphors.

As described in Journal of Applied Physics, Volume 18, April 1947, p. 343-347 "phosphors may be produced which store energy from X-rays, beta-rays, gamma-rays, ultraviolet and visible light and which hold this energy for indefinite periods of time. The energy is released partially in the form of light varying from red to ultraviolet, by infrared radiation with speed of release governed by the intensity of the infrared radiation".

According to a method of recording and reproducing an X-ray pattern disclosed e.g. in US-P 3,859,527 a photostimulable phosphor being incorporated in a panel is exposed to incident pattern-wise modulated X-rays and as a result thereof temporarily stores therein energy stemming from the X-ray radiation pattern. At some interval after the X-ray exposure, a beam of visible or infra-red light scans the panel to stimulate the release of stored energy as light that is detected and converted to sequential electrical signals which are processable to produce a visible image. For this purpose, a stimulable phosphor should store as much as possible of the incident X-ray energy and release as slowly as possible the stored energy until stimulated by the scanning beam. In other words the phosphor should have a high energy storage capacity with slow dark decay. In addition thereto the release of the stored energy on photo-stimulation should proceed efficiently, i.e. almost all the stored energy should be released within reasonable readout times in the form of stimulation light having a wavelength range sufficiently apart from the wavelength range of the stimulating light.

In practice the stimulable phosphor panel is exposed to light of a scanning laser beam having a diameter of 50 to 300 μm to obtain satisfactory resolution.

Particular sulphide-type phosphors described in US-P 3,859,527 (see Fig. 1) are photostimulable with infrared light and are transparent to their own emitted radiation. Although these phosphors can retain an image of high energy radiation for a sufficient length of time, readout by infrared radiation does not yield stimulated light of high luminance.

A search for storage phosphors with better storage capacity has led to the use of the already known alkaline earth metal fluoride X-ray phosphors which proved to be effectively stimulable in the 600 to 700 nm light range (ref. US-P 4,239,968 - Fig. 4).

In that light range the photostimulation can proceed advantageously with a He-Ne laser emitting at 633 nm.

The light emitted by stimulating the phosphor, called stimulated light, is situated preferably in the wavelength range of 300 to 500 nm where photomultiplier tubes have high quantum efficiency (ref. the periodical Radiology, September 1983, p. 834) and whereby it is easy to separate the stimulated light from the longer wavelength stimulating light by means of a proper filter. Because the stimulable phosphor panel has to be used repeatedly the residual (non-readout) energy has to be erased between each imaging stage. Such can be done by flooding the phosphor panel with stimulating light of sufficient luminance to erase the residual energy pattern.

Another important property for a practically useful phosphor is its chemical stability, more particularly its resistance to moisture, since hygroscopic phosphors suffer from loss in luminescence power when becoming wet.

As can be learned from US-P 4,587,036 some europium-doped alkaline earth fluorohalides (described in EP No. 0 021 342) are sensitive to moisture whereby their fluorescence power is reduced.

In published European patent application No. 0 304 121 $Eu^{2+}$ and/or $Ce^{3+}$ doped (activated) halosilicates are described which are particularly resistant to moisture and have a high conversion efficiency of stored X-ray energy into visible stimulation light on stimulation with argon ion laser light of 514.5 nm.

In published European patent application No. 0 382 295 $Eu^{2+}$ or $Ce^{3+}$ doped (activated) halogermanates and halo (silicate-germanate) phosphors are described which are particularly resistant to moisture and have a high conversion efficiency of stored X-ray energy into visible stimulation light on stimulation with light of wavelength range beyond 600 nm, so for He-Ne laser light of 633 nm.

As is generally known most phosphors contain in their empirical formula structure one or more host metals and a dopant or activator metal in admixture with one or more co-dopants. The host metal gives the phosphor X-ray stopping power and in conjunction with the dopant and co-dopants determines its energy storage capacity. The fluorescent light emission spectrum and the efficiency of the transformation of absorbed X-ray energy into emitted fluorescent light on stimulation are determined mainly by the dopant and the optionally present co-dopants.

Bearing in mind the fact that the phosphor composition determines the photostimulation spectrum, as can be learned e.g. from published EP-A 0 304 121, there is a search to manufacture phosphors the photostimulation of which is optimal for the light emitted by commercially available not very expensive and reliable lasers. In that respect infrared emitting semiconductor lasers and semiconductor laser arrays are favoured because of their very compact structure, easy electrical control, relatively low price and their light-emmision power which nowadays is situated in the range of 3 mW to 10 W (ref. The 1991 Product Catalogue of SPECTRA Diode Lasers and the periodical Lasers & Optronics, August 1991). Examples of such lasers are commercially available GaAlAs and InGaAs laser diodes having an emission peak in the range of 750 to 980 nm such as SONY (tradename) SLD 201 V-3 and SONY SLD 202 V-3 having emission maxima at 750 nm and 820 nm respectively.

3. Summary of the invention

It is an object of the present invention to use particular codoped halosilicate and halo(silicate-germanate) phosphors in a process for recording and viewing or reproducing a radiation image by photostimulating said compounds with infrared radiation at a wavelength or in a wavelength range wherein they are very efficiently photostimulated, particularly with semiconductor laser.

It is more particularly an object of the present invention to provide a process for recording and reproducing an X-ray image by means of said codoped halosilicate and halo(silicate-germanate) phosphors wherein the photostimulation of said phosphors after their image-wise exposure to an X-ray image proceeds efficiently with infrared light in the wavelength range of 720 to 1550 nm whereupon the light image of stimulated light is photoelectronically detected.

Other objects and advantages of the present invention will become clear from the following description.

The present invention provides a process for recording and viewing or reproducing a radiation image including the step of photostimulating with infrared light an element containing a photostimulable storage phosphor, wherein :

(1) according to a first mode said infrared light is applied image-wise to said element during and/or after storing therein energy stemming from uniform irradiation with storable radiation energy, and
(2) according to a second mode said infrared light is applied uniformly to said element containing image-wise stored energy stemming from image-wise irradiation of said element with storable radiation energy, characterized in that said infrared light is in the wavelength range of 720 to 1500 nm, preferably in the range of 720 to 1100 nm, and said phosphor is a photostimulable halosilicate or halo(silicate-germanate) phosphor containing as host metal at least one alkaline earth metal, as dopant $Eu^{2+}$ and as (a) co-dopant(s) lithium, boron, yttrium, samarium, lanthanum, gallium and/or titanium.

The halogen in said halosilicate or halo(silicate-germanate) is preferably Cl, Br, or I or mixtures thereof, more preferably mainly Br.

The term "silicate" applies to chemical compounds including anions consisting of silicon and oxygen.

The term "silicate-germanate" applies to chemical compounds including anions consisting of silicon, germanium and oxygen.

In accordance with the above defined first mode the present invention includes a method for recording and viewing or reproducing an infra-red image which method comprises the steps of :

(1) uniformly exposing a photostimulable phosphor to radiation storable by said phosphor, said radiation being e. g. ultraviolet radiation or cathode ray radiation,
(2) image-wise photostimulating said phosphor with infrared light to image-wise release energy stored by said uniformly exposed phosphor, producing thereby photostimulation light, and
(3) viewing or detecting the photostimulation light,

said phosphor being a halosilicate or halo(silicate-germanate) phosphor as defined above, and the photostimulation proceeding with infrared light in the wavelength range of 720 to 1550 nm, preferably in the range of 720 to 1100 nm.

Image-wise photostimulation by photostimulating infrared light of overall ultraviolet exposed storage phosphors has been described for making photographs (ref. e.g. US-P 2,482,814). In another application said photostimulation is applied in direct-viewing or recording of infrared images e.g. in darkness or through haze. In these applications the support of the phosphor-coating is preferably transparent to infrared light and/or the photostimulated light.

In accordance with the above defined second mode the present invention includes a method for recording and reproducing an X-ray image which method comprises the steps of :

(1) image-wise exposing a photostimulable phosphor to X-rays,
(2) photostimulating said phosphor with infrared light to release photostimulation light from said phosphor in accordance with the absorbed X-rays, and

(3) detecting, preferably photoelectronically, the photostimulation light,

said phosphor being a halosilicate or halo(silicate-germanate) phosphor as defined above, and the photostimulation proceeding with photostimulating infrared light in the wavelength range of 720 to 1550 nm, preferably in the range of 720 to 1100 nm.

## 4. Short description of the drawings

In Fig. 1 the "prompt" emission spectrum obtained by X-ray exposure of a lithium-codoped halosilicate phosphor prepared as described in Example 7 is given. Said spectrum is identical with the emission spectrum of the fluorescent light obtained on photostimulation by infrared light. The relative light-emission intensity R.E. is plotted against wavelength in nm.

In Fig. 2, 3 and 4 the conversion efficiency (C.E.) expressed in $pJ/mm^3/mR$ is plotted as a function of the lapse of time in minutes between X-ray irradiation and the read-out of screens of Examples given furtheron.

In Fig. 5 the stimulation spectrum in the infrared region of the phosphor prepared according to Example 1 is presented. In the graph relative luminance, i.e. relative intensity of emission of stimulation light (R.I.E.) is plotted versus wavelength (nm) of stimulating infrared light.

## 5. Detailed description of the Invention

Particularly interesting phosphors for use according to the present invention contain as host metal at least one alkaline earth metal selected from the group consisting of Ba, Sr and Ca.

Preferred phosphors for use according to the present invention are within the scope of of the following empirical formula :

$$Ba_{5-(n+p+q+z)}Z_q Ge_v Si_w O_4 X_6 : Eu^{2+}{}_n, D^+{}_{2p}, M^{r+}{}_{2z/r}$$

wherein

Z is at least one co-host metal selected from the group consisting of strontium and calcium,
q is in the range of 0 to 0.5,
v is in the range of zero to 0.5, and v+w = 1,
X is bromine and/or chlorine,
D is at least one co-dopant selected from the group consisting of $Na^+$, $K^+$,
M is at least one co-dopant selected from the group consisting of $Li^+$, $B^{3+}$, $Ga^{3+}$, $Y^{3+}$, $La^{3+}$, $Sm^{3+}$ and $Ti^{4+}$,
n is in the range of 0.0001 to 0.20,
p is in the range of 0 to 0.015,
z is in the range of $2 \times 10^{-5}$ to $2 \times 10^{-1}$, and
r is 1, 3 or 4.

Other phosphors for use according to the present invention are within the scope of the following empirical formula :

$$Sr_{5-(n+p+q+z)}Z_q Ge_v Si_w O_4 X_6 : EU^{2+}{}_n, D^+{}_{2p}, M^{r+}{}_{2z/r}$$

wherein :

Z is at least one co-host metal selected from the group consisting of barium and calcium,
q is in the range of 0 to 0.5,
v is in the range of zero to 0.5, and v+w - 1,
X is bromine and/or chlorine,
D is at least one co-dopant selected from the group consisting of $Na^+$, $K^+$,
M is at least one co-dopant selected from the group consisting of $Li^+$, $B^{3+}$, $Ga^{3+}$, $Y^{3+}$, $La^{3+}$, $Sm^{3+}$ and $Ti^{4+}$,
n is in the range of 0.0001 to 0.20,
p is in the range of 0 to 0.015,
z is in the range of $2 \times 10^{-5}$ to $2 \times 10^{-1}$, and
r is 1, 3 or 4.

Phosphors particularly useful in X-ray image reproduction by photostimulation are within the scope of one of the empirical formulae (I) or (II) :

$$\text{(I)} \qquad \text{Ba}_{5-(n+p+z)}\text{Ge}_v\text{Si}_w\text{O}_4\text{X}_6 : \text{Eu}^{2+}_n, \text{D}^{m+}_{2p}, \text{Li}_{2z}$$

$$\text{(II)} \qquad \text{Sr}_{5-(n+p+z)}\text{Ge}_v\text{Si}_w\text{O}_4\text{X}_6 : \text{Eu}^{2+}_n, \text{D}^{+}_{2p}, \text{Li}_{2z}$$

wherein :

v is in the range of zero to 0.5, and v+w = 1,
X is bromine and/or chlorine,
n is in the range of 0.0001 to 0.15,
p is in the range of 0 to 0.015,
D is at least one co-dopant selected from the group consisting of Na+ and K+, and
z is in the range of $2 \times 10^{-5}$ to $2 \times 10^{-1}$.

Other photostimulable phosphors particularly useful in X-ray image reproduction according to the present invention are within the scope of one of the empirical formulae (III) or (IV) :

$$\text{Ba}_{5-(n+z)}\text{Ge}_v\text{Si}_w\text{O}_4\text{X}_6, \text{Eu}^{2+}_n, \text{Li}_{2z} \qquad \text{(III)}$$

$$\text{Sr}_{5-(n+z)}\text{Ge}_v\text{Si}_w\text{O}_4\text{Br}_6, \text{Eu}^{2+}_n, \text{Li}_{2z} \qquad \text{(IV)}$$

wherein:

n is in the range from 0.0001 to 0.15,
v is in the range $0 \leq v \leq 0.5$, and v+w is equal to 1,
X is bromine and/or chlorine, and
z is in the range of $2 \times 10^{-5}$ to $2 \times 10^{-1}$.

The codoped photostimulable phosphors can be prepared by firing at least once $\text{Eu}_2\text{O}_3$ or $\text{EuF}_3$ in admixture with (a) host metal halide compound(s), and (a) host metal compound(s) that can be pyrolized into oxide, e.g. carbonates, in admixture with $\text{SiO}_2$ (silica) or a mixture of $\text{SiO}_2$ and $\text{GeO}_2$ for periods of up to 40 hours at temperatures between 450 and 1100°C. $\text{Eu}_2\text{O}_3$ can be used in admixture with halides and/or oxides of other co-dopants, e.g. $\text{Y}_2\text{O}_3$ and/or $\text{YF}_3$, and/or $\text{SmCl}_3$ in the firing stage.

In the preparation of the lithium co-doped phosphors a lithium compound such as LiOH, $\text{Li}_2\text{CO}_3$, LiF, LiCl , LiBr or LiI is added to the raw mix of the above mentioned other phosphor ingredients. The preparation of the boron doped phosphors is carried out e.g. by using $\text{B}_2\text{O}_3$ as flux. The preparation of the gallium doped phosphors is carried out by using in the firing e.g. $\text{Ga(NO}_3)_3$. The preparation of the titanium doped phosphors is carried out by using in the firing e.g. $\text{TiF}_4$.

The raw mix is subjected to a first firing in $\text{N}_2$-atmosphere at a temperature between 450 and 1000 °C. Firing is preferably carried out in multiple stages, in reducing atmosphere at a temperature of between 500 and 1000 °C.

In the recording and reproduction of X-ray images the photostimulation with infrared light of the above described litium doped phosphor(s) proceeds e.g. with infrared (720-1550 nm) emitting gas lasers, dye lasers or solid state lasers of which semiconductor lasers, also called laser diodes are preferred for their compact structure and easy electrically controllable laser light output.

A single semiconductor laser an array of a plurality of diode lasers is used.

Practically useful infrared emitting solid state laser are e.g. Nd:YAG (1064 or 1319 nm), Nd:YLF (1047, 1313 or 1053 nm), Ti:sapphire (tunable between 700-900 nm), Alexandrite (790 nm), Nd;Cr:GSGG (1061 nm), Nd:glass (1061 nm), Er:glass (1540 nm), Er,Yb:glass (1535), Cr:LiSAF (tunable between 780-1010 nm), Fosterite (tunable between 1130-1370) [ref. Lasers and Optronics, December 25, 1991, p. 178-184].

The applied laser diodes have preferably an optical power of at least 50 mW in the wavelength range of 720 to 1550 nm.

For example, photostimulation is carried out with a collimated scanning laser beam of a GaAlAs, InGaAs, GaAlAs/GaAs, InGaAsP, GaLnAsP or InGaAlP semiconductor laser (ref. e.g. Lasers & Optronics, December 25, 1991, p. 7).

A lens or a set of lenses are used preferably to focus the stimulating light beam on the phosphor plate. To correct the astigmatism an anamorph prism pair or a couple of cylindric lenses is used preferably. Likewise optical fibers and more particularly selfoc lenses may be applied to collect and collimate the light of the diode laser.

SELFOC is a registered tradename for optical fibers advertized in the periodical "Lasers & Optronics" / August 1991.

Before detecting the stimulated light the stimulating light is filtered out by one or more optical filters having a high transmission for the stimulated light, i.e. the light emitted on photostimulation.

The light emitted by photostimulation is detected preferably with a transducer transforming light energy into electrical energy, e.g. a phototube (photomultiplier) providing sequential electrical signals that can be digitized and stored. After storage these signals can be subjected to digital processing. Digital processing includes e.g. image contrast enhancement, spatial frequency enhancement, image subtraction, image addition and contour definition of particular image parts.

According to one embodiment for the reproduction of the recorded X-ray image the optionally processed digital signals are transformed into analog signals that are used to modulate a writing laser beam, e.g. by means of an acousto-optical modulator. The modulated laser beam is then used to scan a photographic material, e.g. silver halide emulsion film whereon the X-ray image optionally in image-processed state is reproduced. For said embodiment and apparatus used therein reference is made e.g. to the periodical Radiology, September 1983, p. 833-838.

According to another embodiment the digital signals obtained from the analog-digital conversion of the electrical signals corresponding with the light obtained through photostimulation are displayed on a cathode-ray tube. Before display the signals may be processed by computer. Conventional image processing techniques can be applied to improve the signal-to-noise ratio of the image and enhance the image quality of coarse or fine image features of the radiograph.

For use in said method according to the present invention the photostimulable phosphor is applied preferably in dispersed state in a binder layer that may be supported or self-supporting and forms a screen or panel, called an X-ray image storage panel.

Suitable binders for forming a binder layer incorporating said phosphor in dispersed form are film forming organic polymers, e.g. a cellulose acetate butyrate, polyalkyl (meth)acrylates, e.g. poly(methyl methacrylate), a polyvinyl-n-butyral e.g. as described in the United States Patent Specification 3,043,710, a copoly(vinyl acetate/vinyl chloride) and a copoly(acrylonitrile/butadiene/styrene) or a copoly(vinyl chloride/vinyl acetate/vinyl alcohol) or mixture thereof.

It is preferable that a minimum amount of binder be employed to obtain a high X-ray energy absorption. However, a very small amount of binding agent may result in a too brittle layer, so a compromise has to be made. The coverage of the phosphor is preferably in the range from about 300 to 1500 $g/m^2$.

According to a preferred embodiment the phosphor layer is used as a supported layer on a support sheet. Suitable support materials are made of a film forming organic resin, e.g. polyethylene terephthalate, but paper supports and cardboard supports optionally coated with a resin layer such as an alpha-olefinic resin layer are also particularly useful. Glass and metal supports can also be used. The thickness of the phosphor layer is preferably in the range of 0.05 to 0.5 mm.

For the preparation of the photostimulable phosphor screen the phosphor particles are intimately dispersed in a solution of the binder and then coated on the support and dried. The coating of the present phosphor binder layer may proceed according to any usual technique, e.g. by spraying, dip-coating or doctor blade coating. After coating, the solvent(s) of the coating mixture is (are) removed by evaporation, e.g. by drying in a hot (60°C) air current.

An ultrasonic treatment can be applied to improve the packing density and to perform the de-aeration of the phosphor-binder combination. Before the optional application of a protective coating the phosphor-binder layer may be calendered (put under pressure) to improve the packing density (i.e. the number of grams of phosphor per $cm^3$ of dry coating).

Optionally, a light-reflecting layer is provided between the phosphor-containing layer and its support to enhance the output of light emitted by photostimulation. Such a light-reflecting layer may contain white pigment particles dispersed in a binder, e.g. titanium dioxide particles, or it may be made of a vapour-deposited metal layer, e.g. an aluminium layer, or it may be a coloured pigment layer absorbing stimulating radiation but reflecting the emitted light as described e.g. in US-P 4,380,702.

Optionally a light-absorbing layer is provided between the phosphor-containing layer and its support or in the support itself to avoid reflection of light at the phosphor-containing layer - support interface and thereby increase the resolution of the photostimulable phosphor screen.

In radiography for industry, e.g. applied in non-destructive testing (NDT) of metal objects, where more energetic X-rays and gamma rays are used than in medical X-ray applications it has been found an advantage to combine the fluorescent phosphor layer in an X-ray intensifying screen with a metal layer or metal support the metal of which has an atomic number in the range of 46 to 83 (ref. US-P 3,872,309). The metal layer or support acts as an emitter of photo-electrons and secondary X-rays of lower energy that are absorbed in an adjacent phosphor layer at a higher efficiency than the strongly energetic X- and gamma-rays emitted by an industrial X-ray apparatus. Applying that kind of screen structure in industrial stimulation radiography more energy is accumulated in the storage phosphor layer and consequently more energy can be freed lateron by photostimulation.

On phosphor screens containing halosilicate phosphors as defined herein measurements have been carried out to determine their photo-physical properties.

In a first measurement the "prompt" emission spectrum of the phosphor under X-ray excitation is measured. The measurement proceeds with a spectrofluorimeter in which excitation by X-ray irradiation is carried out with an X-ray source operating at 110 kVp. During continuous X-ray excitation the emitted light is scanned by a monochromator coupled to a photomultiplier. This emission spectrum is identical to that obtained upon photostimulation and is used to select the filter to be used in separating the fluorescent emission light from the stimulation light.

In a second measurement the stimulation spectrum using stimulating infrared light in the wavelength range of 700 to 1200 nm is determined, i.e. the relative stimulation efficiency (C.E./S.E.) by which is meant the relative emission intensity versus wavelength of the stimulating light on constant intensity of stimulation.

The stimulation spectrum is determined with a spectrofluorimeter PERKIN ELMER (trade name) type MPF-4. In order to determine said spectrum the the phosphor sample has been exposed in advance for 1 minute at a distance of 20 cm with an X-ray exposure source BALTEAU (trade name) type GLA operating at 50 kV and cathode current of 10mA.

The spectrophotometer contains two monochromators. In a particular test using a $Ba_5SiO_4Br_6$:Eu,Li phosphor the monochromator used in the measurement of the emission spectrum is kept constantly at 440 nm with a slit-width corresponding to a resolution of 10 nm for receiving the maximum of the emission of said phosphor which has its emission maximum at 440 nm. Between said phosphor and the monochromator a filter V-Y43 (which belongs to the above mentioned MPF-4 type apparatus is used for attenuating light of wavelengths shorter than 400 nm. Hereby the light of the harmonics of the monochromator is substantially excluded.

The photostimulation light stems from a xenon lamp the light of which is scanned by the second monochromator in order to obtain continuously varying stimulating light having a wavelength from 700 to 1200 nm. The intensity of the stimulation light is after its monochromator detected with a photomultiplier and the electric signal output registered with an electronic recorder.

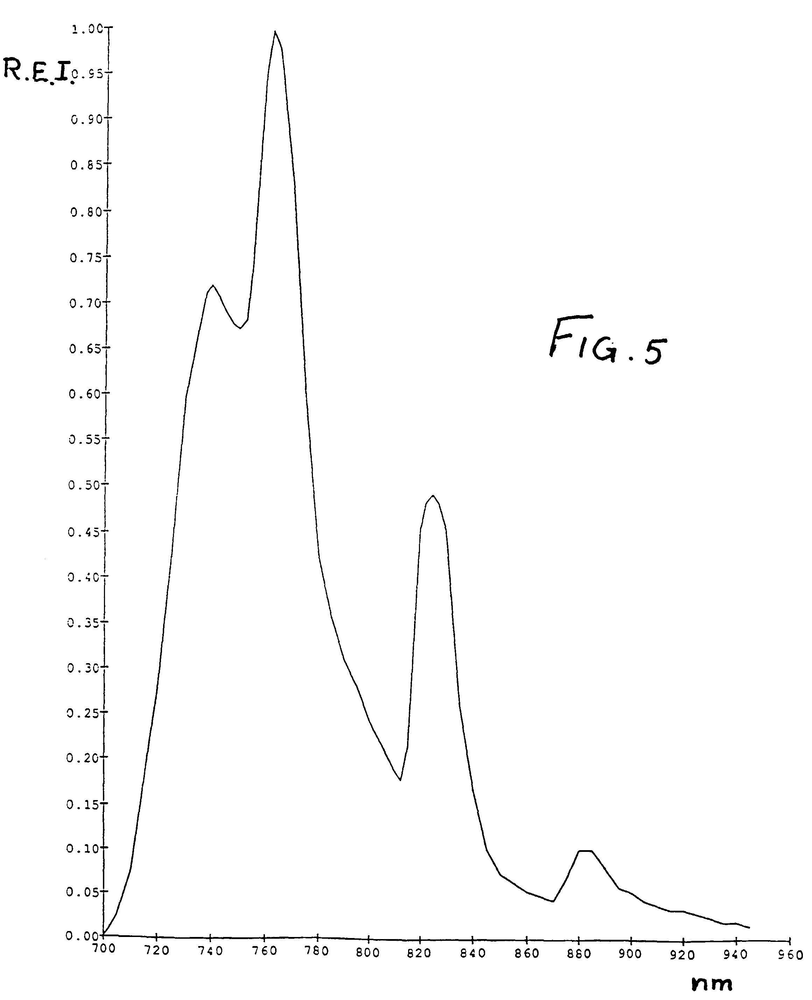

As can be learned from Fig. 5 the infrared stimulation spectrum of the $Ba_5SiO_4Br_6$:Eu,Li phosphor of Example 1 is expressed as relative emission intensity (R.E.I.) versus wavelength (nm) and has emission peaks in the at 740 nm, 760 nm, 820 nm and 890 nm, the main emission peak being at 760 nm.

In a third measurement the stimulation energy (Se) and the total photostimulable energy ($E_0$) stored upon exposure to a given X-ray dose is determined. Prior to X-ray excitation nearly any residual energy still present in the phosphor screen is removed by irradiation. To avoid photoexcitation during erasure a cut-off SCHOTT GG435 filter, which eliminates all wavelengths shorter than 435 nm, is placed between a tungsten lamp emitting photostimulating light to the phosphor screen.

The phosphor screen is then excited with a tungsten-anode X-ray source operating at 85 kVp and 20mA. Hereto the MONODOR X-ray source of SIEMENS AG - Germany was used. The low energy X-rays are filtered out with a 21 mm thick aluminium plate to harden the X-ray spectrum. After X-ray irradiation the phosphor screen is transferred in the dark to the measurement set up. In this set up infrared laser light is used to photostimulate the X-ray irradiated phosphor screen.

Different types of diode lasers can be used, e.g. SONY (tradename) type SLD 204V with an optical power of 30 mW or tapered stripe SONY (tradename) diode laser type SLD302V/W having an optical power of 200 mW at 823 nm. The measurement can be carried out likewise with a laser diode SHARP (tradename) type LT030MD with an optical power of 3 mW at 750 nm.

The optics comprise an electronic shutter, a singlet lens (Melles Griot), a diaphragma, a coloured glass filter SCHOTT (tradename) type BG39 and a photomultiplier HAMAMATSU (tradename) type R 1398.

The laser light of the diode laser which is strongly divergent is focussed with the singlet lens on the phosphor sample pressed against the diaphragma sheet having a circular hole with diameter of 3 mm. That way only the energy stored in the phosphor sample having a spot area of 7.1 mm$^2$ is measured.

When the electronic shutter is opened the infrared laser beam starts to stimulate the phosphor screen and the digital oscilloscope is triggered. The coloured glass filter BG39 which is positioned between the phosphor screen sample and the photomultiplier blocks the infrared stimulating light. Said filter has a transmission coefficient of 95 % at the wavelength of the emitted light (440 nm).

The photocurrent generated in the photomultiplier is converted into a voltage signal. The signal is vizualized with a digital oscilloscope TEKTRONIX (tradename) type 7D20. The measurement results are read by a computer HEWLETT PACKARD (tradename) type HP9826.

The function is described mathematically by $f(t) = A.e^{-t/\tau}$, wherein A is the amplitude, $\tau$ is the time constant, t is stimulation time, and e is the base of the natural logarithms.

At $t = \tau$, 63 % of the stored energy has been released. To obtain said result the integral below the curve is calculated from the start point on (opening of the electronic shutter) and the 1/e point.

The sensitivity of both the photomultiplier and current to voltage convertor, also the convolution of the emission spectrum of the phosphor and the transmission spectrum of the separating filter are taken into account to obtain an absolute value. Because the emission light is scattered equally in all directions only a fraction of the emitted light is detected by the photomultiplier. The positions of the diaphragma and photomultiplier are such that 10 % of the total emission light is detected by the photomultiplier.

After all these corrections have been made a value for the X-ray conversion efficiency is obtained in units of pJ/$mm^2$/mR. The amount of phosphor is taken into account by dividing the last result by the screen thickness, so that an X-ray conversion efficiency in units of pJ/$mm^3$/mR is obtained. Since said result depends on screen thickness all measurements in order to be comparable have to be carried out at nearly same phosphor coverage.

The photostimulation energy is defined as the energy necessary to release 63 % of the stored energy. The applied photostimulation energy is expressed in $\mu$J/$mm^2$ and is obtained by multiplying the time constant with the intensity of the stimulating light.

In a fourth measurement the dark decay characteristics of the phosphor samples are defined. For that purpose the photostimulable energy stored upon exposure to a given X-ray dose was determined 15, 60 or 300 minutes after said exposure. The measuring procedure of C.E. as described above for the third measurement but varying with time is applied.

The stimulable phosphor screens according to the present invention apart from their use in medical and industrial radiography are likewise useful in autoradiography.

In classical autoradiography a photographic record of radioactive material within an object is made by putting the object in contact with a photographic material forming therein directly or through development a record of the radioactive pattern. In autoradiography according to the present invention the radioactive object is placed in contact or close proximity with a stimulable phosphor screen according to the present invention whereby the phosphor stores energy of the radioactive pattern in the object. The stored energy is freed in the form of fluorescent light by photostimulation and the emitted light is detected and used for image storage and reproduction e.g. on photographic material or cathode ray tube.

The present invention is illustrated by the following examples without limiting it thereto.

The ratios, parts and percentages are by weight unless mentioned otherwise.

EXAMPLES 1 and 2 and COMPARATIVE EXAMPLE 3

Preparation of $Ba_{4.985-z}Eu_{0.015}SiO_4Br_6{:}Li_{2z}$ ($z = 5x10^{-3}$ or $1.5x10^{-2}$) (z represents zero in the comparative example 3).

The following ingredients were weighed out :

| | |
|---|---|
| $BaBr_2.2\,H_2O$ | 541.7 g |
| $BaCO_3. 0.47 \% H_2O$ | 187 g |
| $Eu_2O_3. 3.33 \% H_2O$ | 1.32 g |
| $SiO_2. 1.89 \% H_2O$ | 30.6 g |

Said ingredients were intimately mixed and ground. Subsequently the mix was divided over two 500 ml containers. To each container four 1.5 cm balls and 180 ml of anhydrous ethanol were added and the mixtures were ground for 15 min in a planetary ball mill. After grinding the raw mixtures were placed in an oven and dried at 70 to 80 °C overnight.

50 g of the raw mix was subjected to a first firing. The firing was carried out at 800 °C in a $N_2$-flow of 1 l per min. After 90 min the powder was removed from the furnace, ground, and fired again for 90 min under the same conditions.

For preparing the Example 1 material $1.46x10^{-3}$ g of LiOH was intimately mixed with 15 g of the first fired material and the mixture was fired again in reducing atmosphere.

For preparing the Example 2 material $4.38x10^{-3}$ g of LiOH was intimately mixed with 15 g of the first fired material and the mixture was fired again in reducing atmosphere.

For preparing the Comparative Example 3 material 15 g of the first fired material was subjected to a firing in a reducing atmosphere in the absence of any LiOH.

The reducing atmosphere applied in the firings, which were carried out at 800 °C, consisted of a mixture of a 5/95 vol. % mixture of $H_2$ and $N_2$.

Each powder sample was fired twice for 2 hours and twice for 90 min. Inbetween two firings the powders were ground in a mortar.

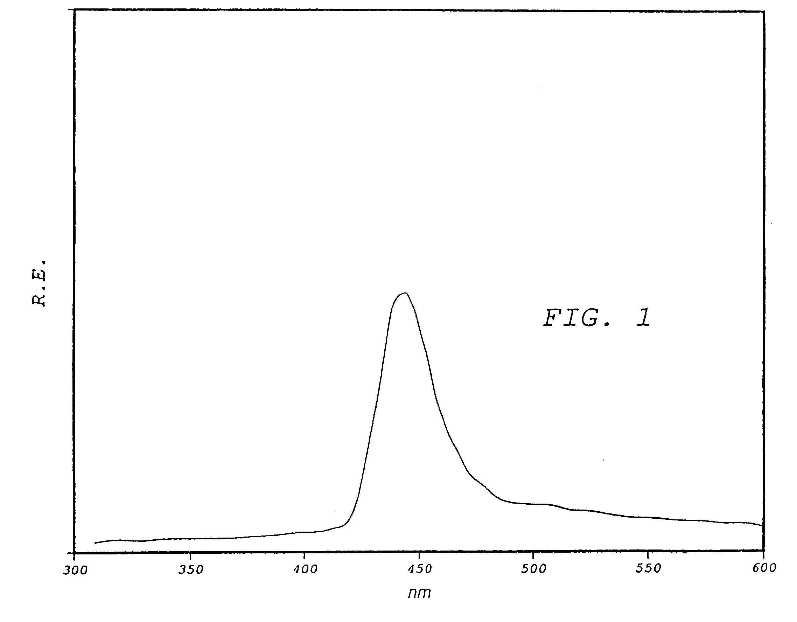

The 3 obtained samples had similar "prompt" emission spectra. The "prompt" emission spectrum is identical with the spectrum of the fluorescent light emitted on photostimulation and is represented in Fig. 1, wherein the relative light-emission intensity R.E. is plotted against wavelength in nm.

Each phosphor sample was then dispersed in a binder solution containing polyethyl acrylate dissolved in ethyl acetate. Each obtained dispersion was coated onto a 100 $\mu$ thick transparent sheet of polyethylene terephthalate to give a coating weight of 500 g/m2. The screens were then used to determine the energy storage characteristics of their phosphor. After erasing any residual stored energy by exposure to He-Ne laser light (633 nm), each screen was irradiated with a given dose of X-rays and then stimulated with He-Ne laser. The conversion efficiency was measured as a defined above.

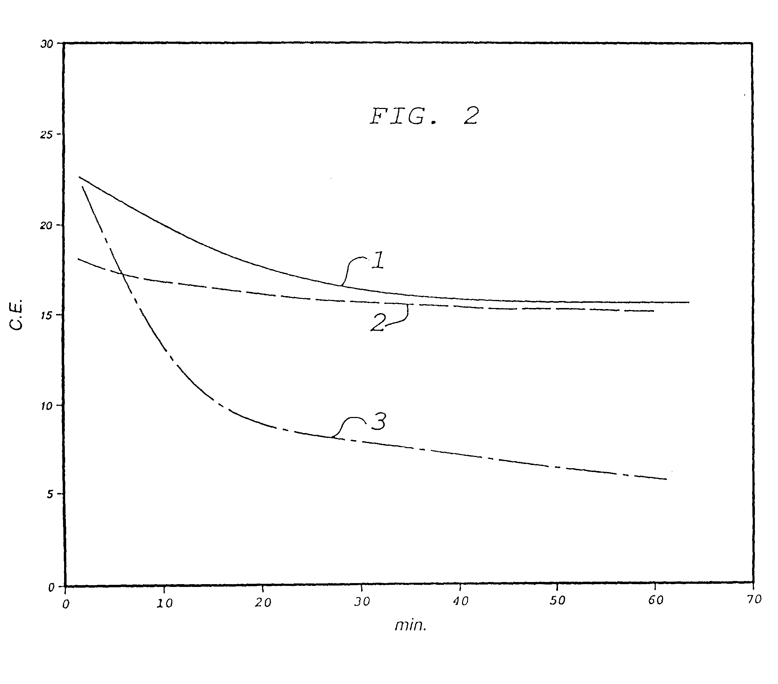

In Fig. 2 the conversion efficiency (C.E.) expressed in $pJ/mm^3/mR$ is plotted as a function of the period of time in minutes between the X-ray irradiation and the read-out with diode laser emitting at 823 nm of the screens of Examples 1, 2 and Comparative Example 3, corresponding respectively with curves 1, 2 and 3.

It is clear from this Fig. 2 that the conversion efficiency plotted as a function of the lapse of time in minutes between X-ray irradiation and the read-out of said screens of Examples 1 and 2 containing Li as dopant is much better (which means that said screens have a much slower dark decay) than that of such phosphor containing no lithium as exemplified in Comparative Example 3.

EXAMPLES 4 and 5 and COMPARATIVE EXAMPLE 6

In preparing the Example 4 phosphor $4.51x10^{-3}$ g of $LiCO_3$ were intimately mixed with 15 g of the raw mix that according to Example 1 had been subjected to a first firing. The thus obtained mixture was fired again in reducing atmosphere.

In preparing the Example 5 phosphor $1.35x10^{-2}$ g of $LiCO_3$ were intimately mixed with 15 g of the raw mix that according to Example 1 had been subjected to a first firing. The thus obtained mixture was fired again in reducing atmosphere.

In preparing the phosphor of Comparative Example 6 15 g of said first fired raw mix was subjected to a reducing firing in the absence of $LiCO_3$.

The reducing firings of the phosphor samples were carried out at 800 °C in an atmosphere consisting of a 5/95 vol. % mixture of $H_2$ and $N_2$.

The phosphor samples were fired four times for 2 hours and inbetween a series of two firings the powders were ground in a mortar.

Screens were made as described for the Examples 1, 2 and Comparative Example 3.

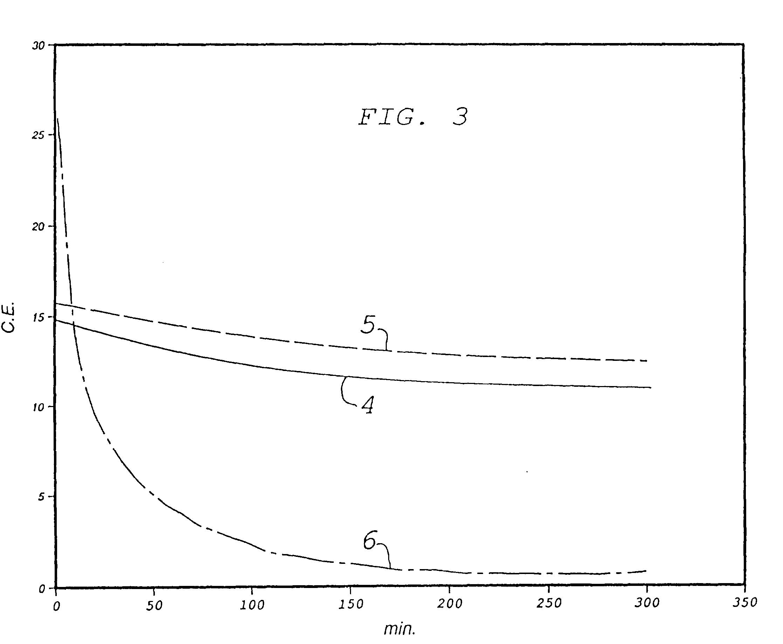

In Fig. 3 the conversion efficiency (C.E.) expressed in $pJ/mm^3/mR$ is plotted as a function of the lapse of time in minutes between X-ray irradiation and the read-out with diode laser emitting at 823 nm of the screens of Examples 4, 5 and Comparative Example 6, corresponding respectively with curves 4, 5 and 6.

It is clear from Fig. 3 that the dark decay behaviour of phosphors according to the present invention as exemplified in Examples 4 and 5 containing Li as dopant is much better than that of such phosphor containing no lithium as exemplified in Comparative Example 3.

EXAMPLES 7, 8, 9 and 10 and COMPARATIVE EXAMPLE 11

Preparation of $Ba_{4.985-z}Eu_{0.015}SiO_4Br_6:Li_{2z}$ ($z = 1.5x10^{-2}$) (z represents zero in the comparative example 11).

The following ingredients were weighed out :

| | |
|---|---|
| $BaBr_2.2 H_2O$ | 541.7 g |
| $BaCO_3. 0.47 \% H_2O$ | 187 g |
| $Eu_2O_3. 3.33 \% H_2O$ | 1.32 g |
| $SiO_2. 1.89 \% H_2O$ | 30.6 g |

Said ingredients were intimately mixed and ground. Subsequently the mix was divided over two 500 ml containers. To each container four 1.5 cm balls and 180 ml of anhydrous ethanol were added and the mixtures were ground for 15 min in a planetary ball mill. After grinding the raw mixtures were placed in an oven and dried at 70 to 80 °C overnight.

50 g of the raw mix was subjected to a first firing. The firing was carried out at 800 °C in a $N_2$-flow of 1 l per min. After 90 min the powder was removed from the furnace, ground, and fired again for 90 min under the same conditions.

For preparing the Example 7 and 8 materials respectively $4.67x10^{-3}$ g of LiF and $7.36x10^{-3}$ g of LiCl was intimately mixed with 15 g of the first fired material and the mixtures were fired again in reducing atmosphere.

For preparing the Example 9 and 10 materials $1.56x10^{-2}$ g of LiBr and $2.41x10^{-2}$ g of LiI was intimately mixed with 15 g of the first fired material and the mixtures were fired again in reducing atmosphere.

For preparing the Comparative Example 11 material 15 g of the first fired material was subjected to a firing in a reducing atmosphere in the absence of any Li-compound.

The reducing atmosphere applied in the firings, which were carried out at 800 °C, consisted of a mixture of a 5/95 vol. % mixture of $H_2$ and $N_2$.

Each powder sample was fired four times for 2 hours.

Inbetween two firings the powders were ground in a mortar.

Each phosphor sample was then dispersed in a binder solution containing polyethyl acrylate dissolved in ethyl acetate. Each obtained dispersion was coated onto a 100 $\mu$ thick transparent sheet of polyethylene terephthalate to give a coating weight of 500 g/m2. The screens were then used to determine the energy storage characteristics of their phosphor. After erasing any residual stored energy by exposure to diode laser light (750 nm), each screen was irradiated with a given dose of X-rays and then stimulated with diode laser. The conversion efficiency was measured as a function of the lapse of time between the X-ray irradiation and the readout of the phosphor screens proceeding with diode laser emitting at 823 nm.

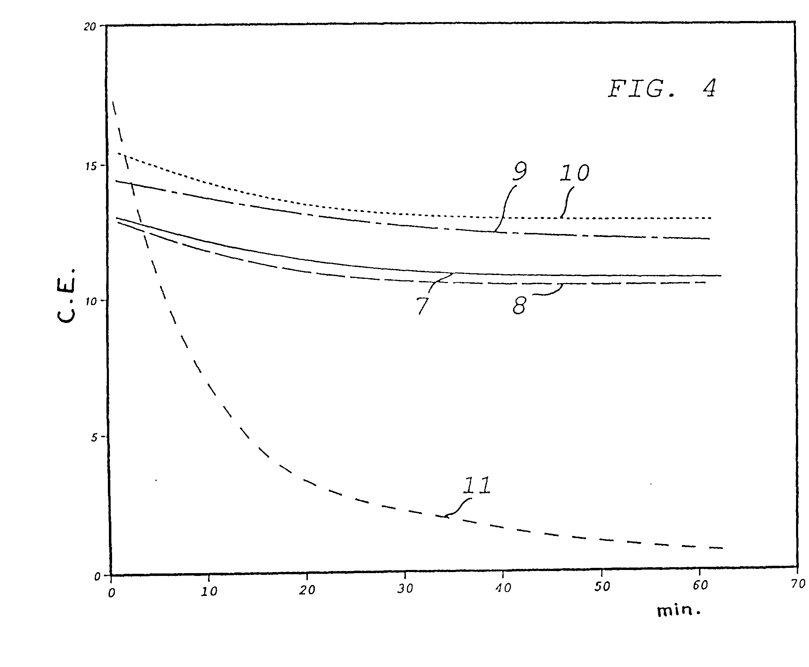

In Fig. 4 the conversion efficiency (C.E.) expressed in pJ/mm$^3$/mR is plotted as a function of the period of time in minutes between the X-ray irradiation and the read-out of the screens of Examples 7 to 10 and Comparative Example 11, corresponding respectively with curves 7, 8, 9, 10 and 11.

It is clear from this Fig. 4 that the dark decay behaviour of phosphors according to the present invention as exemplified in Examples 7 to 10 containing Li as dopant is much better than that of such phosphor containing no lithium as exemplified in Comparative Example 11.

EXAMPLES 12-18

In preparing the phosphors of the examples 12-18 the raw mix was made as for the phosphor of comparative example 11.

For the preparation of the example 12 material $1.37 \times 10^{-2}$ g of $SmCl_3$ was mixed intimately with 15 g of the raw mix.

For the preparation of the example 13 and 14 materials were used respectively $1.42 \times 10^{-2}$ g and $4.26 \times 10^{-2}$ g of yttrium isopropoxide being intimately mixed with 15 g of the raw mix.

For the preparation of the example 15 material $1.11 \times 10^{-2}$ g of $B_2O_3$ was mixed intimately with 15 g of the raw mix.

For the preparation of the example 16 material $3.14 \times 10^{-2}$ g of $LaF_3$ was mixed intimately with 15 g of the raw mix.

For the preparation of the example 17 material $4.09 \times 10^{-2}$ g of $Ga(NO_3)_3$ was mixed intimately with 15 g of the raw mix.

For the preparation of the example 18 material $1.98 \times 10^{-2}$ g of $TiF_4$ was mixed intimately with 15 g of the raw mix.

The example 12-18 phosphor materials were prepared by subjecting said 15 g of raw mix containing their co-dopants to six firings.

The first firing was carried out at 800 °C in a $N_2$-flow of 1 l per min. After 90 minutes the powder was removed from the furnace, ground and fired again for 90 minutes under the same conditions.

Subsequently, four 2 h firings were performed in a reducing atmosphere consisting of a mixture of 5 vol % of $H_2$ and 95 vol % of $N_2$. The firing temperature was 800 °C. Inbetween two firings the powders were ground in a mortar.

Each phosphor sample was then dispersed in a binder solution containing polyethyl acrylate dissolved in ethyl acetate. Each obtained dispersion was coated onto a 100 $\mu$ thick transparent sheet of polyethylene terephthalate to give a coating weight of 500 g/m2. The screens were then used to determine the energy storage characteristics of their phosphor. After erasing any residual stored energy by exposure to He-Ne laser light (633 nm), each screen was irradiated with a given dose of X-rays and then stimulated with a He-Ne laser. The conversion efficiency (C.E.) was determined as defined by analysis of the measuring results.

In the same way the conversion efficiency (C.E.) was determined upon stimulation with diode laser light of 750 and 823 nm respectively.

Referring to the Examples 12-18 in the following Table the ratios of C.E. values obtained by stimulating the phosphor screen samples with light of 750 nm and 633 nm and obtained with 823 nm in comparison with 633 nm light are given. A material free from the above co-dopants is used for comparative purposes as a blanc.

TABLE

| Example | C.E. (750 nm)/C.E.(633 nm) | C.E.(823 nm)/C.E.(633 nm) |
|---------|---------------------------|---------------------------|
| 12 | 1 | 1.89 |
| 13 | 1.13 | 2.08 |
| 14 | 0.83 | 1.41 |

TABLE   (continued)

| Example | C.E. (750 nm)/C.E.(633 nm) | C.E.(823 nm)/C.E.(633 nm) |
|---|---|---|
| 15 | 1 | 1.61 |
| 16 | 0.89 | 1.44 |
| 17 | 1.03 | 1.75 |
| 18 | 1.06 | 1.55 |

**Claims**

1. A process for recording and viewing or reproducing a radiation image by photostimulating with infrared light an element containing a photostimulable storage phosphor, wherein :

   (1) according to a first mode said infrared light is applied image-wise to said element containing uniformly stored energy stemming from uniform irradiation with storable radiation energy, and
   (2) according to a second mode said infrared light is applied uniformly to said element containing image-wise stored energy stemming from image-wise irradiation of said element with storable radiation energy,

   characterized in that said infrared light is in the wavelength range of 720 to 1550 nm, is emitted by a semiconductor laser also called laser diode and said phosphor is a photostimulable halosilicate or halo(silicate-germanate) phosphor comprising as host metal at least one alkaline earth metal, as dopant $Eu^{2+}$ and as (a) co-dopant(s) lithium, boron, yttrium, samarium, lanthanum, gallium and/or titanium.

2. Process according to claim 1, comprising the steps of :

   (1) uniformly exposing a photostimulable phosphor to radiation storable by said phosphor, said radiation being ultraviolet radiation or cathode ray radiation,
   (2) image-wise photostimulating said phosphor with said infrared light to image-wise release energy stored by said uniformly exposed phosphor, producing thereby photostimulation light, and
   (3) viewing or detecting the photostimulation light.

3. Process according to claim 1, wherein said process comprises the steps of :

   (1) image-wise exposing a photostimulable phosphor to X-rays,
   (2) photostimulating said phosphor with said infrared light to release photostimulation light from said phosphor in accordance with the absorbed X-rays, and
   (3) detecting the photostimulation light.

4. Process according to claim 1, wherein said laser diode has an emission power of at least 50 mW in the wavelength range of 720 to 1550 nm.

5. Process according to claim 4, wherein said laser diode is a GaAlAs, InGaAs, GaAlAs/GaAs, InGaAsP, GaLnAsP or InGaAlP semiconductor laser.

6. Process according to claim 1, wherein said laser diode is coupled at its output face with (an) optical fiber(s) focusing or collimating the laser beam emitted by said laser diode.

7. Process according to claim 1, wherein said phosphor contains as host metal at least one alkaline earth metal selected from the group consisting of Ba, Sr and Ca.

8. Process according to claim 1, wherein said halosilicate or halo(silicate-germanate) phosphor contains as halogen Cl, , Br or I or mixtures thereof.

9. Process according to claim 7, wherein said phosphor is within the scope of the following empirical formula :

$$Ba_{5-(n+p+q+z)}Z_qGe_vSi_wO_4X_6 : Eu^{2+}{}_n, D^+{}_{2p}, M^{r+}{}_{2z/r}$$

wherein :

Z is at least one co-host metal selected from the group consisting of strontium and calcium,
q is in the range of 0 to 0.5,
v is in the range of zero to 0.5, and v+w = 1 ,
X is bromine and/or chlorine,
D is at least one co-dopant selected from the group consisting of Na⁺, K⁺,
M is at least one co-dopant selected from the group consisting of $Li^+$, $B^{3+}$, $Ga^{3+}$, $Y^{3+}$, $La^{3+}$, $Sm^{3+}$ and $Ti^{4+}$,
n is in the range of 0.0001 to 0.20,
p is in the range of 0 to 0.015,
z is in the range of $2x10^{-5}$ to $2x10^{-1}$, and
r is 1, 3 or 4.

10. Process according to claim 7, wherein said phosphor is within the within the scope of of the following empirical formula :

$$Sr_{5-(n+p+q+z)}Z_qGe_vSi_wO_4X_6 :Eu^{2+}_n,D^+_{2p},M^{r+}_{2z/r}$$

wherein :

Z is at least one co-host metal selected from the group consisting of barium and calcium,
q is in the range of 0 to 0.5,
v is in the range of zero to 0.5, and v+w = 1 ,
X is bromine and/or chlorine,
D is at least one co-dopant selected from the group consisting of Na⁺, K⁺
M is at least one co-dopant selected from the group consisting of $Li^+$, $B^{3+}$, $Ga^{3+}$, $Y^{3+}$, $La^{3+}$, $Sm^{3+}$ and $Ti^{4+}$,
n is in the range of 0.0001 to 0.20,
p is in the range of 0 to 0.015,
z is in the range of $2x10^{-5}$ to $2x10^{-1}$, and
r is 1, 3 or 4.

11. Process according to claim 7, wherein said phosphor is within the scope of one of the following empirical formulae (I) or (II) :

$$(I) \qquad Ba_{5-(n+p+z)}Ge_vSi_w O_4X_6 :Eu^{2+}_n,D^+_{2p},Li_{2z}$$

$$(II) \qquad Sr_{5-(n+p+z)}Ge_vSi_w O_4X_6 :Eu^{2+}_n,D^+_{2p},Li_{2z}$$

wherein :

v is in the range of 0 to 0.5, and v+w = 1 ,
X is bromine and/or chlorine,
n is in the range of 0.0001 to 0.15,
p is in the range of 0 to 0.015,
D is at least one co-dopant selected from the group consisting of Na⁺ and K⁺' and
z is in the range of $2x10^{-5}$ to $2x10^{-2}$.

12. Process according to claim 7, wherein said phosphor is within the scope of one of the empirical formulae (III) or (IV) :

$$Ba_{5-(n+z)}Ge_vSi_w O_4X_6;Eu^{2+}_n,Li_{2z} \qquad\qquad (III)$$

$$Sr_{5-(n+z)}Ge_vSi_w O_4Br_6;Eu^{2+}_n,Li_{2z} \qquad\qquad (IV)$$

wherein :

n is in the range from 0.0001 to 0.15,
v is in the range $0 \leq v \leq 0.5$, and v+w is equal to 1,
X is bromine and/or chlorine, and
z is in the range of $2x10^{-5}$ to $2x10^{-2}$.

**Patentansprüche**

1. Ein Verfahren zur Aufnahme und Betrachtung oder Wiedergabe eines Strahlungsbildes durch Infrarotlicht-Fotoanregung eines einen fotoanregbaren Speicherleuchtstoff enthaltenden Elements, dadurch gekennzeichnet, daß :

(1) gemäß einer ersten Ausführungsform das Element, das gleichmäßig gespeicherte, durch eine gleichmäßige Bestrahlung mit speicherbarer Strahlungsenergie gelieferte Energie enthält, bildmäßig mit Infrarotlicht bestrahlt wird, und
(2) gemäß einer zweiten Ausführungsform das Infrarotlicht gleichmäßig auf das Element, das bildmäßig gespeicherte Energie enthält, die durch bildmäßige Bestrahlung des Elements mit speicherbarer Strahlungsenergie emittiert ist, angewandt wird, dadurch gekennzeichnet, daß das Infrarotlicht eine Wellenlänge zwischen 720 und 1.500 nm aufweist und durch einen Halbleiterlaser, ebenfalls Laserdiode genannt, emittiert ist und der Leuchtstoff ein fotoanregbarer Halosilikat- oder Halo(silikatgermanat)-Leuchtstoff ist, der als Wirtsmetall wenigstens ein Erdalkalimetall, als Dotiermittel $Eu^{2+}$ und als Hilfsdotiermittel Lithium, Bor, Yttrium, Samarium, Lanthan, Gallium und/oder Titan enthält.

2. Verfahren nach Anspruch 1, das die folgenden Stufen umfaßt :

(1) die gleichmäßige Belichtung eines fotoanregbaren Leuchtstoffs mit Strahlung, die durch diesen Leuchtstoff gespeichert werden kann, wobei diese Strahlung Ultraviolettstrahlung oder Kathodenstrahlung ist,
(2) die bildmäßige Fotoanregung des Leuchtstoffs mit Infrarotlicht, um durch den gleichmäßig belichteten Leuchtstoff gespeicherte Energie bildmäßig freizusetzen, wobei Fotoanregungslicht hergestellt wird, und
(3) das Betrachten oder Nachweisen des Fotoanregungslichts.

3. Verfahren nach Anspruch 1, das die folgenden Stufen umfaßt :

(1) die bildmäßige Belichtung eines fotoanregbaren Leuchtstoffs mit Röntgenstrahlen,
(2) die Fotoanregung des Leuchtstoffs mit Infrarotlicht, um entsprechend den absorbierten Röntgenstrahlen Fotoanregungslicht aus dem Leuchtstoff freizusetzen, und (3) das Nachweisen des Fotoanregungslichts.

4. Verfahren nach Anspruch 1, dadurch gekennzeichnet, daß die Laserdiode ein Emissionsvermögen von wenigstens 50 mW im Wellenbereich zwischen 720 und 1.550 nm aufweist.

5. Verfahren nach Anspruch 4, dadurch gekennzeichnet, daß die Laserdiode ein GaAlAs-, InGaAs-, GaAlAs/GaAs-, InGaAsP-, GaLnAsP- oder InGaAlP-Halbleiterlaser ist.

6. Verfahren nach Anspruch 1, dadurch gekennzeichnet, daß die Laserdiode an ihrer Ausgangsseite mit (einer) optischen Faser(n) verbunden ist, die den durch die Laserdiode emittierten Laserstrahl richtet (richten) oder kollimiert (kollimieren).

7. Verfahren nach Anspruch 1, dadurch gekennzeichnet, daß der Leuchtstoff als Wirtsmetall wenigstens ein Erdalkalimetall aus der Gruppe bestehend aus Ba, Sr und Ca enthält.

8. Verfahren nach Anspruch 1, dadurch gekennzeichnet, daß der Halosilikat- oder Halo(silikatgermanat)-Leuchtstoff als Halogen Cl, Br oder I oder Mischungen derselben enthält.

9. Verfahren nach Anspruch 7, dadurch gekennzeichnet, daß der Leuchtstoff der folgenden empirischen Formel entspricht :

$$Ba_{5-(n+p+q+z)}Z_qGe_vSi_wO_4X_6 :Eu^{2+}_n,D^+_{2p},M^{r+}_{2z/r}$$

in der bedeuten :

Z wenigstens ein Hilfswirtsmetall aus der Gruppe bestehend aus Strontium und Calcium,
q eine Zahl zwischen 0 und 0,5,
v eine Zahl zwischen 0 und 0,5, wobei v+w = 1,
X Brom und/oder Chlor,
D wenigstens ein Hilfsdotiermittel aus der Gruppe bestehend aus $Na^+$ und $K^+$,
M wenigstens ein Hilfsdotiermittel aus der Gruppe bestehend aus $Li^+$, $B^{3+}$, $Ga^{3+}$, $Y^{3+}$, $La^{3+}$, $Sm^{3+}$ und $Ti^{4+}$,
n eine Zahl zwischen 0,0001 und 0,20,
p eine Zahl zwischen 0 und 0,015,
z eine Zahl zwischen $2x10^{-5}$ und $2x10^{-1}$, und
r 1, 3 oder 4.

10. Verfahren nach Anspruch 7, dadurch gekennzeichnet, daß der Leuchtstoff der folgenden empirischen Formel entspricht :

$$Sr_{5-(n+p+q+z)}Z_qGe_vSi_wO_4X_6 :Eu^{2+}_n,D^+_{2p},M^{r+}_{2z/r}$$

in der bedeuten :

Z wenigstens ein Hilfswirtsmetall aus der Gruppe bestehend aus Barium und Calcium,
q eine Zahl zwischen 0 und 0,5,
v eine Zahl zwischen 0 und 0,5, wobei v+w = 1,
X Brom und/oder Chlor,
D wenigstens ein Hilfswirtsmetall aus der Gruppe bestehend aus $Na^+$ und $K^+$,
M wenigstens ein Hilfswirtsmetall aus der Gruppe bestehend aus $Li^+$, $B^{3+}$, $Ga^{3+}$, $Y^{3+}$, $La^{3+}$, $Sm^{3+}$ und $Ti^{4+}$,
n eine Zahl zwischen 0,0001 und 0,20,
p eine Zahl zwischen 0 und 0,015,
z eine Zahl zwischen $2x10^{-5}$ und $2x10^{-1}$, und
r 1, 3 oder 4.

11. Verfahren nach Anspruch 7, dadurch gekennzeichnet, daß der Leuchtstoff einer der nachstehenden empirischen Formeln (I) oder (II) entspricht :

$$(I) \qquad Ba_{5-(n+p+z)}Ge_vSi_wO_4X_6 :Eu^{2+}_n,D^{m+}_{2p},Li_{2z}$$

$$(II) \qquad Sr_{5-(n+p+z)}Ge_vSi_wO_4X_6 :Eu^{2+}_n,D^+_{2p},Li_{2z}$$

in denen bedeuten :

v eine Zahl zwischen 0 und 0,5, wobei v+w = 1,
X Brom und/oder Chlor,
n eine Zahl zwischen 0,0001 und 0,15,
p eine Zahl zwischen 0 und 0,015,
D wenigstens ein Hilfswirtsmetall aus der Gruppe bestehend aus Na+ und K+, und
z eine Zahl zwischen $2x10^{-5}$ und $2x10^{-1}$.

12. Verfahren nach Anspruch 7, dadurch gekennzeichnet, daß der Leuchtstoff einer der nachstehenden empirischen Formeln (III) oder (IV) entspricht :

$$Ba_{5-(n+z)}Ge_vSi_w\,O_4X_6, Eu_n^{2+}, Li_{2z} \tag{III}$$

$$Sr_{5-(n+z)}Ge_vSi_w\,O_4Br_6, Eu_n^{2+}, Li_{2z} \tag{IV}$$

in denen bedeuten :

n eine Zahl zwischen 0,0001 und 0,15,
v eine Zahl zwischen $0 \leq v \leq 0,5$, wobei v+w = 1,
X Brom und/oder Chlor, und
z eine Zahl zwischen $2x10^{-5}$ und $2x10^{-1}$.

## Revendications

1. Un procédé d'enregistrement et de visualisation ou de reproduction d'une image obtenue par rayonnement en photostimulant à la lumière infrarouge un élément contenant un luminophore d'emmagasinage photostimulable, dans lequel

(1) selon un premier mode, cette lumière infrarouge est appliquée sous forme d'image à cet élément contenant de l'énergie uniformément emmagasinée provenant d'une irradiation uniforme avec de l'énergie de rayonnement emmagasinable, et
(2) selon un second mode, cette lumière infrarouge est appliquée uniformémemt à cet élément contenant de l'énergie emmagasinée sous forme d'image provenant de l'irradiation, sous forme d'image, de cet élément avec de l'énergie de rayonnement emmagasinable,

caractérisé en ce que cette lumière infrarouge se situe dans la zone de longueurs d'onde de 720 à 1550 nm, est émise par un laser à semiconducteur, également appelé diode laser, et que le luminophore est un luminophore photostimulable d'halosilicate ou d'halo(silicate-germanate) comprenant comme métal-hôte au moins un métal alcalino-terreux, comme dopant l'$Eu^{2+}$ et comme codopant(s) le lithium, le bore, l'yttrium, le samarium, le lanthanum, le gallium et/ou le titane.

2. Procédé selon la revendication 1, comprenant les phases de:

(1) l'exposition uniforme d'un luminophore photostimulable à un rayonnement emmagasinable par ce luminophore, ce rayonnement étant un rayonnement ultraviolet ou un rayonnement de rayons cathodiques.
(2) la photostimulation sous forme d'image de ce luminophore par cette lumière infrarouge pour libérer sous forme d'image l'énergie emmagasinée par ce luminophore exposé uniformément, produisant ainsi de la lumière de photostimulation, et
(3) la visualisation ou la détection de la lumière de photostimulation.

3. Procédé selon la revendication 1, caractérisé en ce que ce procédé comprend les phases de:

(1) l'exposition sous forme d'image d'un luminophore photostimulable à des rayons X,
(2) la photostimulation de ce luminophore par la lumière infrarouge pour libérer la lumière de photostimulation de ce luminophore en conformité avec les rayons X absorbés , et
(3) la détection de la lumière de photostimulation.

4. Procédé selon la revendication 1, caractérisé en ce que la diode laser a un pouvoir d'émission d'au moins 50 mW dans la zone de longueurs d'onde de 720 à 1550 nm.

5. Procédé selon la revendication 4, caractérisé en ce que la diode laser est un laser à semiconducteur à GaAlAs, InGaAs, GaAlAs/GaAs, InGaAsP, GaLnAsP ou InGaAlP.

6. Procédé selon la revendication 1, caractérisé en ce que la diode laser est couplée à sa face de sortie avec une ou plusieurs fibres optiques focalisant ou collimatant le faisceau laser émis par cette diode laser.

7. Procédé selon la revendication 1, caractérisé en ce que le luminophore contient comme métal-hôte au moins un métal alcalino-terreux choisi parmi Ba, Sr et Ca.

8. Procédé selon la revendication 1, caractérisé en ce que le luminophore d'halosilicate ou d'halo(silicate-germanate) contient comme halogène Cl, Br ou I ou des mélanges de ceux-ci.

9. Procédé selon la revendication 7, caractérisé en ce que le luminophore est dans la portée de la formule empirique suivante:

$$Ba_{5-(n+p+q+z)}Z_qGe_vSi_wO_4X_6 :Eu^{2+}_n,D^+_{2p},M^{r+}_{2z/r}$$

dans laquelle:

Z est au moins un métal-cohôte choisi parmi le strontium et le calcium,
q est une valeur comprise entre 0 et 0,5,
v est une valeur comprise entre 0 et 0,5, et v+w = 1,
X est un atome de brome et/ou de chlore,
D est au moins un codopant choisi parmi $Na^+$, $K^+$,
M est au moins un codopant choisi parmi $Li^+$, $B^{3+}$, $Ga^{3+}$, $Y^{3+}$, $La^{3+}$, $Sm^{3+}$ et $Ti^{4+}$,
n est une valeur comprise entre 0,0001 et 0,20,
p est une valeur comprise entre 0 et 0,015,
z est une valeur comprise entre $2x10^{-5}$ et $2x10^{-1}$, et
r est 1, 3 ou 4.

10. Procédé selon la revendication 7, caractérisé en ce que le luminophore est dans la portée de la formule empirique suivante:

$$Sr_{5-(n+p+q+z)}Z_qGe_vSi_wO_4X_6 :Eu^{2+}_n,D^+_{2p},M^{r+}_{2z/r}$$

dans laquelle:

Z est au moins un métal-cohôte choisi parmi le barium et le calcium, q est une valeur comprise entre 0 et 0,5,
v est une valeur comprise entre 0 et 0,5, et v+w = 1,
X est un atome de brome ou de chlore,
D est au moins un codopant choisi parmi $Na^+$, $K^+$,
M est au moins un codopant choisi parmi $Li^+$, $B^{3+}$, $Ga^{3+}$, $Y^{3+}$, $La^{3+}$, $Sm^{3+}$ et $Ti^{4+}$,
n est une valeur comprise entre 0,0001 et 0,20,
p est une valeur comprise entre 0 et 0,015,
z est une valeur comprise entre $2x10^{-5}$ et $2x10^{-1}$, et
r est 1, 3 ou 4.

11. Procédé selon la revendication 7, caractérisé en ce que le luminophore est dans la portée d'une des formules empiriques suivantes (I) or (II) :

$$(I) \quad Ba_{5-(n+p+z)}Ge_vSi_wO_4X_6 :Eu^{2+}_n,D^+_{2p},Li_{2z}$$

$$(II) \quad Sr_{5-(n+p+z)}Ge_vSi_wO_4X_6 :Eu^{2+}_n,D^+_{2p},Li_{2z}$$

dans lesquelles:

v est une valeur comprise entre 0 et 0.5, et v+w = 1,
X est un atome de brome ou de chlore,
n est une valeur comprise entre 0,0001 et 0,15,
p est une valeur comprise entre 0 et 0,015,

D est au moins un codopant choisi parmi $Na^+$ et de $K^+$, et

z est une valeur comprise entre $2 \times 10^{-5}$ et $2 \times 10^{-2}$.

12. Procédé selon la revendication 7, caractérisé en ce que le luminophore est dans la portée d'une des formules empiriques suivantes (III) ou (IV) :

$$Ba_{5-(n+z)}Ge_vSi_wO_4X_6^{2+},Eu_n,Li_{2z} \qquad (III)$$

$$Sr_{5-(n+z)}Ge_vSi_wO_4Br_6,Eu_n^{2+}, Li_{2z} \qquad (IV)$$

dans lesquelles :

n est une valeur comprise entre 0,0001 et 0,15, .

v est une valeur comprise entre $0 \leq v \leq 0,5$, et $v+w = 1$,

X est un atome de brome et/ou de chlore, et

z est une valeur comprise entre $2 \times 10^{-5}$ et $2 \times 10^{-2}$.

FIG. 1

R.E.

nm

FIG. 2

EP 0 559 258 B1

FIG. 3

EP 0 559 258 B1

FIG. 4

FIG.5